# FASCICULE DE BREVET EUROPEEN

(11) **EP 2 816 790 B1**
(45) Date de publication et mention de la délivrance du brevet: **27.04.2016**
(21) Numéro de dépôt: 14173338.6
(22) Date de dépôt: 20.06.2014
(51) Int. Cl.: H04M 3/42, H04M 7/00

(54) **Procédé d'affichage du nom de l'appelant dans le cas d'un appel secret**
Anzeigeverfahren des Namens des Anrufers im Fall eines verdeckten Anrufs
Method for displaying the name of the calling party in the case of a secret call

(30) Priorité: 21.06.2013 FR 1355926
(43) Date de publication de la demande: 24.12.2014
(73) Titulaire: Orange, 75015 Paris (FR)
(72) Inventeur: Moncomble, Ghislain, 22310 Plestin les Grèves (FR)

(56) Documents cités:
- WO-A1-2011/136708

## Description

La présente invention concerne le domaine des télécommunications, et plus particulièrement un procédé d'affichage d'information sur l'identité d'un correspondant appelant avec un numéro masqué. L'invention concerne également un terminal mettant en oeuvre ce procédé.

La présentation du numéro ou identification de l'appelant (CLIP pour « Calling Line Identification Présentation » en anglais) est un service téléphonique qui fournit à la personne appelée le numéro de la personne appelante. A partir de ce numéro, une recherche peut être effectuée dans une base de donnée locale ou distance (annuaire, carnet d'adresses, ...) afin de fournir, par exemple, l'identité en toutes lettres ou la photo de l'appelant. Ces informations sont généralement affichées lors de la présentation de l'appel sur le terminal de l'appelé et peuvent par exemple permettre à l'appelé de décider s'il va ou non répondre à l'appel. Le numéro de l'appelant peut également servir à la création d'une nouvelle entrée dans le carnet d'adresse de l'appelé, ce dernier n'ayant plus qu'à renseigner le nom du correspondant.

Malgré les évolutions technologiques importantes dont ont bénéficié les terminaux ces dernières années, on peut noter que les données d'identification communiquées à l'appelé restent très succinctes : en effet, seul le numéro d'appel est transmis. C'est pourquoi des propositions ont été formulées pour permettre la transmission d'informations supplémentaires directement depuis un terminal appelant vers un terminal appelé. Par exemple, le procédé décrit dans le document US20070010264 préconise l'utilisation d'un canal de transmission auxiliaire afin de transmettre des informations complémentaires concernant l'appelant. Selon ce procédé, lorsqu'un appel entrant est présenté sur un terminal, celui-ci utilise le numéro de l'appelant fourni par le service CLIP pour établir une liaison directe avec le terminal appelant (en utilisant par exemple une connexion Internet) et demander des informations supplémentaires au terminal appelant.

WO2011/136708 décrit un procédé de présentation d'une identité d'un appelant sur un terminal lors de l'établissement d'un appel masqué comportant l'étape de réception d'une donnée d'identité.

Cependant, ces procédés nécessitent que le numéro de l'appelant soit disponible sur le terminal de l'appelé afin d'effectuer une recherche dans un carnet d'adresse ou encore pour établir une connexion auxiliaire vers le terminal appelant dans le but de recueillir des informations supplémentaires. Or, les opérateurs téléphoniques fournissent à l'appelant des moyens pour bloquer le service d'identification de la ligne appelante. Il s'agit du service de masquage du numéro ou de secret d'appel (CLIR pour Calling Line Identification Restriction en anglais). Différents moyens permettent à l'appelant de garder secret son numéro d'appel :
- Le blocage permanent : Tous les appels émis comporteront une demande de secret d'identification par l'appelant.
- Le blocage de ligne : l'utilisateur demande un blocage permanent de sa ligne, mais a la possibilité de désactiver appel par appel le blocage (en particulier afin d'assurer la compatibilité avec un éventuel rejet d'appel anonyme activé par son interlocuteur).
- Le blocage appel par appel : l'utilisateur peut, quel que soit l'état permanent de la ligne, demander pour chaque appel que son identité ne soit pas divulguée.

Dès lors que l'indication de divulgation associé à l'identité de ligne appelante est positionné à « demande de restriction » ou à « identité non disponible », aucune identité d'appelant, quelle qu'elle soit, n'est transmise vers l'appelé, et il devient impossible pour l'appelant, dans l'état actuel de la technique, de présenter une identité à l'appelé.

Pourtant, le fait de présenter une identité lors d'un appel masqué présente de nombreux intérêts, et permet notamment d'inciter un interlocuteur à répondre à un appel, même si l'appelant ne souhaite pas lui fournir ses coordonnées.

La présente invention améliore la situation par rapport à l'état de la technique.

A cet effet, l'invention concerne un procédé de présentation d'une identité d'un appelant sur un terminal lors de l'établissement d'un appel masqué, tel qu'il comporte les étapes suivantes :
- Réception d'une donnée d'identité sur un canal de communication auxiliaire, différent du canal de signalisation d'appel,
- Mémorisation dans une base de données d'un enregistrement dit « anonyme » comportant au moins la donnée d'identité reçue et un horodatage de la réception de la donnée d'identité, et à la réception d'un appel masqué :
- Recherche dans la base de données de l'enregistrement dit « anonyme » le plus récent dans une fenêtre temporelle prédéfinie,
- Présentation de l'identité de l'appelant à partir des données de l'enregistrement au moins tant que l'appel est en cours d'établissement.

A la réception d'un appel masqué, l'enregistrement dit « anonyme » le plus récent est présenté à l'appelé. Ainsi, lors d'un appel téléphonique utilisant un service de masquage du numéro, un appelant peut communiquer une identité à l'appelé afin de l'inciter à répondre. Seul un enregistrement compris dans une fenêtre temporelle prédéfinie précédant la réception de l'appel peut être sélectionné, ce qui présente l'avantage de réduire le risque qu'un enregistrement sans rapport avec l'appel soit présenté.

Les différents modes de réalisation mentionnés ci-après peuvent être ajoutés indépendamment ou en combinaison les uns avec les autres, aux étapes du procédé ci-dessus.

Selon un autre mode de réalisation, l'étape de mémorisation dans une base de données donne lieu à la création d'un nouvel enregistrement uniquement si aucun enregistrement dit « anonyme » relatif à la donnée d'identité reçue n'est présent au préalable dans la base de données. Ainsi, le terminal peut optimiser les ressources disponibles en ne créant un nouvel enregistrement que lorsque cela est nécessaire. Ce mode de réalisation présente également l'avantage d'éviter la création de doublons dans la base de donnée.

Dans un mode particulier de réalisation, l'identité de l'appelant est mémorisée dans un carnet d'adresses associé au terminal appelé. Ainsi, l'utilisateur conserve les données d'identité transmises par l'appelant dans l'emplacement de stockage habituel de ses contacts et peut s'y référer ultérieurement en utilisant ses outils habituels de gestion de contacts.

Dans un autre mode de réalisation, l'enregistrement dit « anonyme » comporte un champ prédéfini permettant de le différencier des enregistrements également présents dans le carnet d'adresses et renseignés par l'utilisateur. De cette façon, l'utilisateur du terminal peut différencier les données d'identités reçues selon le procédé de présentation et les données de contact qu'il a lui-même renseigné.

Dans un autre mode de réalisation, la donnée d'identité comporte au moins un champ apte à recevoir une adresse de contact alternative transmise par l'appelant. Ainsi, l'appelant peut communiquer à l'utilisateur du terminal appelé une adresse de contact différente de celle utilisée pour établir la communication et conserver cette dernière secrète.

L'invention concerne également un dispositif de présentation caractérisé en ce qu'il comprend :
- Un module de réception d'une donnée d'identité sur un canal de communication auxiliaire, différent du canal de signalisation d'appel,
- Un module de mémorisation dans une base de données d'un enregistrement dit « anonyme » comportant au moins la donnée d'identité reçue et un horodatage de la réception de la donnée d'identité,
- Un module de réception d'un appel masqué,
- Un module de recherche dans la base de données de l'enregistrement dit « anonyme » le plus récent dans une fenêtre temporelle prédéfinie,
- Un module de présentation de l'identité de l'appelant à partir des données de l'enregistrement tant que l'appel est en cours d'établissement.

L'invention concerne également un terminal comprenant un dispositif de présentation tel que décrit ci-dessus.

L'invention concerne aussi un programme d'ordinateur comportant des instructions pour l'execution du procédé de présentation tel que décrit ci-dessus, lorsque le programme est exécuté par un processeur.

Les terminaux, dispositifs et programmes présentent des avantages analogues à ceux du procédé décrit ci-dessus.

D'autres avantages et caractéristiques de l'invention apparaîtront plus clairement à la lecture de la description suivante d'un mode de réalisation particulier de l'invention, donné à titre illustratif et non imitatif, et des dessins annexés, parmi lesquels :
- la figure 1 illustre les étapes du procédé de présentation selon un mode particulier de réalisation,
- la figure 2 illustre le procédé de présentation selon un mode de réalisation et
- la figure 3 illustre l'architecture d'un dispositif de présentation selon un mode particulier de réalisation de l'invention.

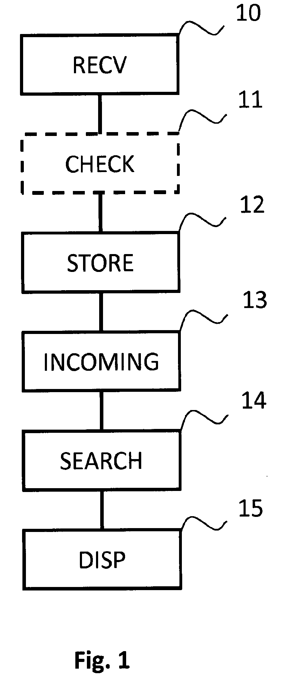

La figure 1 illustre les étapes du procédé de présentation selon un mode particulier de réalisation. Prenons par exemple le cas d'un utilisateur d'un premier terminal qui souhaite contacter un second utilisateur d'un second terminal. Le premier utilisateur ne souhaitant pas communiquer son numéro d'appel, il a opté pour un service de masquage de son numéro auprès de son opérateur téléphonique. Pour inciter le second utilisateur à répondre à l'appel, le premier utilisateur utilise le procédé tel quel décrit maintenant.

Lors d'une première étape 10, un terminal reçoit une donnée relative à l'identité d'un terminal appelant avant la réception d'un appel vocal. Ces données sont par exemple transmises par l'intermédiaire d'un réseau de communication de type IP (pour Internet Protocol) ou encore par un service de type SMS (pour Short Message Service en anglais) ou par tout autre moyen de communication autorisant le transport de la donnée d'identité. Pour cela, le terminal dispose d'une interface lui permettant de se connecter au réseau de communication, comme par exemple un interface à un réseau de données cellulaire de type 3G ou encore une interface réseau WIFI. Il peut également s'agir par exemple d'une interface réseau de type Ethernet ou ADSL (Asymetric Digital Subscriber Line en anglais) dans le cas d'un terminal filaire.

Selon une étape 12, la donnée d'identité reçue est sauvegardée. Selon un mode de réalisation préféré, la donnée d'identité est horodatée puis sauvegardée en créant par exemple un nouvel enregistrement dans le carnet d'adresse associé au terminal. Lorsque l'enregistrement est sauvegardé dans le carnet d'adresses, il peut être enrichi d'un champ supplémentaire permettant de différencier les enregistrements dits « anonymes » créés selon le procédé de présentation et les enregistrements créés par d'autres moyens, comme par exemple les enregistrements créés par l'utilisateur. La date et l'heure de réception de la donnée d'identité peut également être sauvegardée dans un champ ajouté à l'enregistrement. Selon un autre mode de réalisation, la donnée d'identité peut être par exemple sauvegardée dans une base de donnée distincte de celle du carnet d'adresse.

Selon un autre mode de réalisation, le procédé comporte une étape optionnelle 11 précédant l'étape de sauvegarde, selon laquelle le terminal recherche un enregistrement existant qui corresponde à la donnée d'identité. La correspondance peut se faire par exemple en examinant le nom fournit dans la donnée d'identité et en recherchant parmi les enregistrements créés précédemment selon le procédé de présentation, ou de manière générale, en vérifiant la correspondance entre les champs disponibles dans la donnée d'identité et ces mêmes champs dans les enregistrements sauvegardés précédemment.

Selon une étape 13, le terminal reçoit un appel téléphonique pour lequel le numéro d'appel n'est pas disponible. Le numéro peut ne pas être disponible par exemple parce que l'appelant a souscrit à un service de masquage du numéro d'appel de façon à garder son numéro confidentiel.

Selon une étape 14, le terminal effectue une recherche parmi les enregistrements créés précédemment selon le procédé de présentation, de façon à trouver l'enregistrement le plus récent qui appartienne à une fenêtre temporelle prédéfinie. Le terminal peut par exemple se baser sur le champ supplémentaire permettant de différencier les enregistrements créés selon le procédé de présentation et les enregistrements créés par d'autres moyens et utiliser par exemple une fenêtre temporelle correspondant aux 5 secondes qui précèdent la réception de l'appel téléphonique pour effectuer la recherche.

Lorsqu'un enregistrement correspondant à ces critères de filtrage est trouvé, les données correspondantes peuvent par exemple être présentées à l'utilisateur du terminal lors d'une étape 15. Les informations présentées peuvent par exemple contenir une identité alternative fournie par l'appelant. Cette identité peut par exemple être un pseudonyme sur un réseau social, un nom d'utilisateur sur un site de petites annonce ou tout autre identifiant permettant à l'appelé de se faire une idée sur l'origine de l'appel. Les données présentées peuvent également contenir une adresse de contact alternative, comme par exemple un numéro de téléphone, une adresse email, une référence d'article sur un site de petites annonces ou encore un lien vers le profil de l'utilisateur sur un réseau social ou plus généralement, toute information permettant à l'appelé d'entrer en contact avec l'appelant.

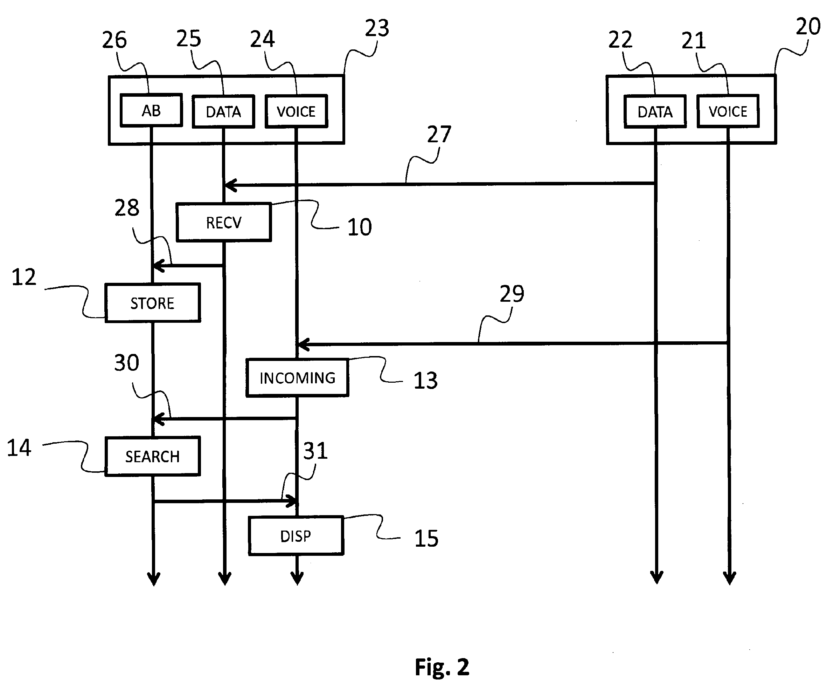

La figure 2 illustre de manière plus détaillée l'enchainement des étapes du procédé. Un premier terminal 20 d'un premier utilisateur est au moins doté d'un gestionnaire de communications vocales 21, utilisant par exemple une interface GSM (Global System for Mobile Communications) ou VoIP (Voice over IP en anglais) et des moyens de communication de données 22, comme par exemple une interface WIFI, 3G ou encore une interface SMS. Selon un autre mode de réalisation, il peut également s'agir d'un terminal connecté à un réseau commuté comme par exemple un terminal de type DECT (Digital Enhanced Cordless Télécommunications en anglais) ou CAT-iq (Cordless Advanced Technology-internet and quality en anglais).

L'utilisateur de ce premier terminal souhaite entrer en communication avec un second utilisateur d'un second terminal 23. Le second terminal 23 dispose d'un gestionnaire de communications vocales 24 et de données 25, par exemple une interface GSM et une interface WIFI, ou tout autre moyen de communication permettant d'établir une communication vocale ainsi qu'une connexion de données. Le second terminal 23 dispose en outre d'un carnet d'adresses associé au terminal. Les données du carnet d'adresses peuvent être par exemple stockées dans une base de donnée locale au terminal 23, ou bien un carnet d'adresses réseau, accessible par exemple via la connexion de données du terminal.

L'utilisateur du premier terminal 20 ne souhaite pas communiquer son numéro d'appel ni son identité réelle. En revanche, il souhaite communiquer son identifiant sur un réseau social et les coordonnées pour le contacter sur ce même réseau social. Pour cela, l'utilisateur du premier terminal 20 utilise le procédé de présentation selon l'invention.

Après que l'utilisateur du premier terminal 20 ait saisi les informations qu'il désire présenter à l'utilisateur du second terminal 23, par exemple au travers d'une interface présentée sur un écran, le terminal émet via sa connexion de données 22 un message 27 à destination du second terminal 23 contenant une donnée d'identité. Le message peut être par exemple transmis en utilisant un protocole de type IP, par SMS ou par tout autre moyen apte à transférer les données du premier terminal vers le second terminal. Selon un mode de réalisation de l'invention, les données sont transmises par l'intermédiaire d'une connexion IP. Le premier terminal 20 peut, selon un mode particulier de réalisation, connaître l'adresse IP correspondant au terminal 23 en interrogeant par exemple une base de données accessible par l'intermédiaire de sa connexion de données, dans laquelle est maintenue une association entre un numéro d'appel téléphonique et l'adresse IP détenue par le terminal correspondant à ce numéro d'appel. Cette association peut par exemple être mise à jour par les terminaux mettant en oeuvre la présente invention à chaque fois qu'une adresse IP leur est assignée sur une connexion de données.

Le terminal 23 reçoit le message par l'intermédiaire de sa connexion de données lors de l'étape 10. Le terminal demande alors le stockage de la donnée d'identité dans le carnet d'adresses du terminal en invoquant une commande 28 prévue à cet effet. Selon un mode de réalisation, la commande 28 peut être par exemple une requête d'ajout dans un carnet d'adresses réseau. Selon un autre mode de réalisation, la commande 28 peut par exemple correspondre à un appel de procédure locale au terminal. La donnée est horodatée et stockée dans le carnet d'adresse lors d'une étape 12.

Lorsque l'utilisateur du terminal 20 procède à l'émission de l'appel vocal 29 en activant un service de masquage du numéro d'appel, le second terminal 23 reçoit la notification d'appel lors d'une étape 13. Le numéro d'appel n'étant pas disponible, le terminal 23 effectue une recherche dans les enregistrements créés précédemment selon le procédé de présentation, lors d'une étape 14. Selon un mode de réalisation particulier, la recherche est commandée par l'envoi d'une requête 30, par exemple une requête de type SQL, à destination du carnet d'adresses, de façon à obtenir l'enregistrement le plus récent en se basant sur la donnée d'horodatage mis à jour à la création ou à la modification de l'enregistrement lors d'une étape 12 du procédé. Le terminal 23 est en outre configuré avec une fenêtre temporelle de 5 secondes par exemple, pendant lesquelles un enregistrement créé selon le procédé peut être associé à un appel téléphonique dont le numéro d'appel est masqué. Autrement dit, une donnée d'identité mémorisée selon le procédé de présentation peut être présentée lors d'un appel uniquement si la différence entre la date et l'heure de réception de l'appel et la donnée d'horodatage associée à l'enregistrement est inférieure ou égale à la fenêtre temporelle prédéfinie.

Lorsqu'un enregistrement correspondant à ces critères est trouvé, il peut être par exemple transmis 31 au gestionnaire de communications vocales du terminal pour être affiché à l'utilisateur, par exemple lors de la présentation de l'appel vocal selon une étape 15 et, selon un mode de réalisation particulier, indexé par exemple dans un historique d'appel. Selon un autre mode de réalisation particulier, si plusieurs enregistrements correspondent aux critères de recherche et s'ils appartiennent à la fenêtre temporelle prédéfinie, le terminal peut par exemple afficher les différentes identités trouvées.

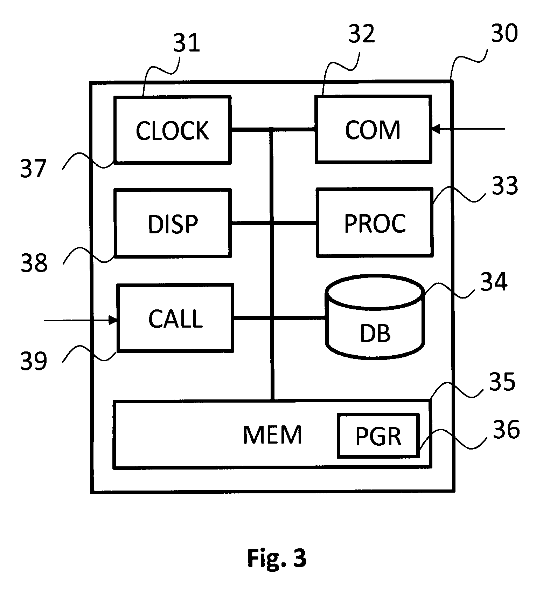

La figure 3 illustre l'architecture d'un dispositif 30 mettant en oeuvre le procédé de présentation selon un mode particulier de réalisation de l'invention.

Le dispositif comprend un espace de stockage temporaire 35, par exemple une mémoire MEM, une unité de traitement 33 équipée par exemple d'un processeur PROC. L'unité de traitement peut être piloté par un programme 36, par exemple un programme d'ordinateur PGR, mettant en oeuvre le procédé de présentation tel que décrit dans l'invention en référence aux figures 1 et 2, et notamment les étapes de réception (10) d'une donnée d'identité sur un canal de communication auxiliaire, de mémorisation (12) dans une base de données d'un enregistrement comportant au moins la donnée d'identité reçue et un horodatage de la réception de cette donnée d'identité, de réception d'un appel masqué (13), de recherche (14) dans la base de donnée de l'enregistrement le plus récent dans une fenêtre temporelle prédéfinie et de présentation (15) de l'identité de l'appelant à partir des données de l'enregistrement tant que l'appel est en cours d'établissement.

A l'initialisation, les instructions du programme d'ordinateur 36 sont par exemple chargées dans une mémoire RAM (Random Access Memory) avant d'être exécutées par le processeur de l'unité de traitement 33. Le processeur de l'unité de traitement 33 met en oeuvre les étapes du procédé de présentation selon les instructions du programme d'ordinateur 36.

Pour cela, le dispositif comprend, outre la mémoire 35, des moyens de communication 32 (COM) permettant au dispositif de se connecter au réseau de communication et d'échanger des données avec d'autres dispositifs par l'intermédiaire du réseau de télécommunications. Ces moyens de communication peuvent par exemple être une interface réseau et servent notamment à recevoir une donnée d'identité. Le dispositif comprend également un base de donnée 34 (DB) apte à mémoriser des données de manière pérenne et une horloge 31 (CLOCK) apte à fournir une donnée d'horodatage.

Le dispositif comprend également des moyens d'établissement d'appels vocaux 39 (CALL), comme par exemple une interface GSM ou une application de voix sur IP.

Selon un mode particulier de réalisation de l'invention, le dispositif comprend des moyens d'affichage 38 (DISP) tels que par exemple un écran permettant par exemple d'afficher sous forme visuelle la donnée d'identité correspondant à un appelant.

Selon un autre mode de réalisation particulier, le dispositif est intégré dans un terminal de type téléphone mobile, tablette, ordinateur personnel, télévision connectée à un réseau de télécommunication, borne interactive ou encore n'importe quel autre équipement connecté à un réseau de communication et permettant d'établir des communications vocales et une connexion de données.

## Revendications

1. Procédé de présentation d'une identité d'un appelant sur un terminal lors de l'établissement d'un appel masqué, **caractérisé en ce qu'**il comporte les étapes suivantes :
- Réception d'une donnée d'identité (10) sur un canal de communication auxiliaire, différent du canal de signalisation d'appel,
- Mémorisation dans une base de données (12) d'un enregistrement dit « anonyme » comportant au moins la donnée d'identité reçue et un horodatage de la réception de la donnée d'identité, et à la réception d'un appel masqué (13) :
- Recherche dans la base de données (14) de l'enregistrement dit « anonyme » le plus récent dans une fenêtre temporelle prédéfinie,
- Présentation de l'identité de l'appelant (15) à partir des données de l'enregistrement au moins tant que l'appel est en cours d'établissement.

2. Procédé selon la revendication 1 **caractérisé en ce que** l'étape de mémorisation dans une base de données donne lieu à la création d'un nouvel enregistrement si aucun enregistrement relatif à la donnée d'identité reçue n'est présent au préalable dans la base de données.

3. Procédé selon la revendication 1 **caractérisé en ce que** la donnée d'identité est mémorisée dans un carnet d'adresses associé au terminal.

4. Procédé selon la revendication 3 **caractérisé en ce que** l'enregistrement dit « anonyme » comporte au moins un champ prédéfini permettant de le différencier des enregistrements du carnet d'adresses renseignés par l'utilisateur.

5. Procédé selon la revendication 1 **caractérisé en ce que** la donnée d'identité comporte au moins un champ apte à recevoir une adresse de contact alternative transmise par l'appelant.

6. Dispositif de présentation d'une identité d'un appelant sur un terminal lors de l'établissement d'un appel masqué, **caractérisé en ce qu'**il comprend:
- Un module de réception (32) d'une donnée d'identité sur un canal de communication auxiliaire, différent du canal de signalisation d'appel,
- Un module de mémorisation (34) dans une base de données d'un enregistrement dit « anonyme » comportant au moins la donnée d'identité reçue et un horodatage de la réception de la donnée d'identité,
- Un module de réception d'un appel masqué (39),
- Un module de recherche (34) dans la base de données de l'enregistrement dit « anonyme » le plus récent dans une fenêtre temporelle prédéfinie,
- Un module de présentation (38) de l'identité de l'appelant à partir des données de l'enregistrement tant que l'appel est en cours d'établissement.

7. germinal de communication **caractérisé en ce qu'**il comprend un dispositif selon la revendication 6.

8. Programme d'ordinateur comportant des instructions pour l'exécution du procédé de présentation selon l'une quelconque des revendications 1 à 5, lorsque le programme est exécuté par un processeur.

## Patentansprüche

1. Verfahren zur Darstellung einer Identität eines Anrufers auf einem Endgerät bei der Durchführung eines verdeckten Anrufs, **dadurch gekennzeichnet, dass** es die folgenden Schritte umfasst:
- Empfang eines Identitätsdatums (10) auf einem Hilfskommunikationskanal, der zum Rufanzeigekanal unterschiedlich ist,
- Speichern in einer Datenbasis (12) einer so genannten "anonymen" Aufzeichnung, umfassend mindestens das empfangene Identitätsdatum und einen Zeitstempel des Empfangs des Identitätsdatums, und bei Empfang eines verdeckten Anrufs (13):
- Suchen der neuesten so genannten "anonymen" Aufzeichnung in einem vordefinierten Zeitfenster in der Datenbasis (14),
- Darstellung der Identität des Anrufers (15) auf Basis der Daten der Aufzeichnung zumindest solange der Anruf durchgeführt wird.

2. Verfahren nach Anspruch 1, **dadurch gekennzeichnet, dass** der Schritt des Speicherns in einer Datenbasis zur Schaffung einer neuen Aufzeichnung führt, wenn keine Aufzeichnung zu dem empfangenen Identitätsdatum vorher in der Datenbasis vorhanden ist.

3. Verfahren nach Anspruch 1, **dadurch gekennzeichnet, dass** das Identitätsdatum in einem dem Endgerät zugeordneten Adressbuch gespeichert ist.

4. Verfahren nach Anspruch 3, **dadurch gekennzeichnet, dass** die so genannte "anonyme" Aufzeichnung mindestens ein vordefiniertes Feld umfasst, das es ermöglicht, sie von den Aufzeichnungen des vom Benutzer übermittelten Adressbuches zu unterscheiden.

5. Verfahren nach Anspruch 1, **dadurch gekennzeichnet, dass** das Identitätsdatum mindestens ein Feld umfasst, das geeignet ist, eine alternative Kontaktadresse, die vom Anrufer übertragen wird, zu empfangen.

6. Vorrichtung zur Darstellung einer Identität eines Anrufers auf einem Endgerät bei der Durchführung eines verdeckten Anrufs, **dadurch gekennzeichnet, dass** sie umfasst:
- ein Modul (32) für den Empfang eines Identitätsdatums auf einem Hilfskommunikationskanal, der zum Rufanzeigekanal unterschiedlich ist,
- ein Modul (34) zum Speichern in einer Datenbasis einer so genannten "anonymen" Aufzeichnung, umfassend mindestens das empfangene Identitätsdatum und einen Zeitstempel des Empfangs des Identitätsdatums,
- ein Modul für den Empfang eines verdeckten Anrufs (39),
- ein Modul (34) zum Suchen der neuesten so genannten "anonymen" Aufzeichnung in einem vordefinierten Zeitfenster in der Datenbasis,
- ein Modul (38) zur Darstellung der Identität des Anrufers auf Basis der Daten der Aufzeichnung solange der Anruf durchgeführt wird.

7. Kommunikationsendgerät, **dadurch gekennzeichnet, dass** es eine Vorrichtung nach Anspruch 6 umfasst.

8. Computerprogramm, umfassend Befehle zur Ausführung des Darstellungsverfahrens nach einem der Ansprüche 1 bis 5, wenn das Programm von einem Prozessor ausgeführt wird.

## Claims

1. Method for displaying an identity of a caller on a terminal during the set-up of a call from a withheld number, **characterized in that** it comprises the following steps:
- receiving an item of identity data (10) over an auxiliary communication channel, which is different from the call signalling channel,
- storing, in a database (12), a so-called "anonymous" record comprising at least the received item of identity data and a timestamp for the reception of the item of identity data, and upon reception of a call from a withheld number (13),
- searching, in the database (14), for the so-called "anonymous" record that is the most recent in a predefined time window,
- displaying the identity of the caller (15) based on the data from the record at least while the call is being set up.

2. Method according to Claim 1, **characterized in that** the step of storage in a database gives rise to the creation of a new record if no record relating to the received item of identity data is present in the database beforehand.

3. Method according to Claim 1, **characterized in that** the item of identity data is stored in an address book associated with the terminal.

4. Method according to Claim 3, **characterized in that** the so-called "anonymous" record comprises at least one predefined field making it possible to differentiate it from the records of the address book that were input by the user.

5. Method according to Claim 1, **characterized in that** the item of identity data comprises at least one field suitable for receiving an alternative contact address transmitted by the caller.

6. Device for displaying an identity of a caller on a terminal during the set-up of a call from a withheld number, **characterized in that** it comprises:
- a module for receiving (32) an item of identity data over an auxiliary communication channel, which is different from the call signalling channel,
- a module for storing (34), in a database, a so-called "anonymous" record comprising at least the received item of identity data and a timestamp for the reception of the item of identity data,
- a module for receiving a call from a withheld number (39),
- a module for searching (34), in the database, for the so-called "anonymous" record that is the most recent in a predefined time window,
- a module for displaying (38) the identity of the caller based on the data from the record while the call is being set up.

7. Communication terminal, **characterized in that** it comprises a device according to Claim 6.

8. Computer program comprising instructions for the execution of the display method according to any one of Claims 1 to 5 when the program is executed by a processor.
